# EUROPEAN PATENT APPLICATION

(11) **EP 4 503 235 A1**
(43) Date of publication of application: **05.02.2025**
(21) Application number: 22935601.9
(22) Date of filing: 30.09.2022
(51) Int. Cl.: H01M 10/0585, H01B 1/06, H01M 4/134, H01M 4/38, H01M 10/052, H01M 10/0562

(54) **ALL-SOLID-STATE SECONDARY BATTERY**

(30) Priority: 31.03.2022 JP 2022058652
(71) Applicant: TDK Corporation, Tokyo 103-6128 (JP)
(72) Inventor: TAKEUCHI, Keiko, Tokyo 103-6128 (JP); YAMAGUCHI, Yuusuke, Tokyo 103-6128 (JP); SUZUKI, Shota, Tokyo 103-6128 (JP); NAGATOMI, Ayaka, Tokyo 103-6128 (JP)
(74) Representative: Epping - Hermann - Fischer
(86) International application number: PCT/JP2022/036679
(87) International publication number: WO 2023/188470

(57) **Abstract**

This all-solid-state secondary battery includes a sintered body including a positive electrode layer, a negative electrode layer, and a solid electrolyte layer interposed between the positive electrode layer and the negative electrode layer. The solid electrolyte layer includes a primary phase including an electrolyte represented by Expression (1) and a secondary phase including a boron-containing compound containing lithium, boron, and oxygen, and at least a part of the secondary phase is in contact with a part of an interface between the negative electrode layer and the solid electrolyte layer:

Li₃₊ₓSiₓP₁₋ₓO₄ (1)

(where 0<x<1 is satisfied in Expression (1)).

## Description

### Technical Field

The present invention relates to an all-solid-state secondary battery.

The present application claims priority on Japanese Patent Application No. 2022-058652 filed on March 31, 2022, the content of which is incorporated herein by reference.

### Background Art

In recent years, development of electronics technology has progressed actively, and a decrease in size, weight, and thickness and multi-functionalization of portable electronic devices have been achieved. Therewith, strong demand for a decrease in size, weight, and thickness and improvement in reliability of batteries serving as power sources of electronic devices has emerged. Therefore, an all-solid-state secondary battery using a solid electrolyte as an electrolyte has attracted attention. In the related art, sulfide-based solid electrolytes and oxide-based solid electrolytes are mainly used as a solid electrolyte of an all-solid-state secondary battery.

Since a sulfide-based solid electrolyte has excellent reversibility, an interface between the solid electrolyte and an active material can be formed by compacting the sulfide-based solid electrolytes. However, the sulfide-based solid electrolyte produces hydrogen sulfide through reaction with water, and this causes a problem in safety.

On the other hand, an oxide-based solid electrolyte is not likely to produce hydrogen sulfide through reaction with water and thus is safe. However, in order to obtain high ionic conductivity, the oxide-based solid electrolyte needs to be densified and needs to be sintered at a high temperature therefor. However, in sintering for forming a dense solid electrolyte layer, the oxide-based solid electrolyte may react with an active material to form a reactive layer having low ionic conductivity at an interface between the oxide-based solid electrolyte and the active material.

In a case where an oxide-based solid electrolyte is sintered at a high temperature for densification, LSPO (Li₃₊ₓSiₓP₁₋ₓO₄) is known as an oxide-based solid electrolyte which is relatively stable to active materials (see Non-Patent Document 1). However, LSPO has a problem in that LSPO has low ionic conductivity in the order of 1×10⁻⁶ S/cm (see Non-Patent Document 2).

A method of adding boron as a sintering additive is known as technology of enhancing the ionic conductivity of LSPO. For example, Non-Patent Document 1 discloses that sintering is promoted to enhance the ionic conductivity by adding lithium borate to LSPO.

Patent Document 1 discloses an all-solid-state lithium-ion secondary battery in which a compound including lithium and boron is contained in a positive electrode layer, a negative electrode layer, and a solid electrolyte layer as a lithium-ion secondary battery having low internal resistance and large capacity.

### Citation List

### Patent Document

Patent Document 1: Japanese Patent No. 6455807 (B)

### Non-Patent Documents

Non-Patent Document 1: Solid State Ionics 283 (2015), pages 109 to 114
Non-Patent Document 2: Ionics 7 (2001), pages 469 to 473

### Summary of Invention

### Technical Problem

In the related art, demand for an increase in capacity of an all-solid-state secondary battery has emerged much more.

The present invention was made in consideration of the aforementioned circumstances, and an objective thereof is to provide an all-solid-state secondary battery having a large capacity.

### Solution to Problem

The following solutions are provided to achieve the aforementioned objective.

[1] An all-solid-state secondary battery including a sintered body including a positive electrode layer, a negative electrode layer, and a solid electrolyte layer interposed between the positive electrode layer and the negative electrode layer, wherein the solid electrolyte layer includes a primary phase including an electrolyte represented by Expression (1) and a secondary phase including a boron-containing compound containing lithium, boron, and oxygen, and at least a part of the secondary phase is in contact with a part of an interface between the negative electrode layer and the solid electrolyte layer:

   Li₃₊ₓSiₓP₁₋ₓO₄ (1)

   (where 0<x<1 is satisfied in Expression (1)).
[2] In the all-solid-state secondary battery according to [1], a volume proportion of the secondary phase in the solid electrolyte layer is equal to or greater than 1 vol% and equal to or less than 10 vol%.
[3] In the all-solid-state secondary battery according to [1] or [2], the secondary phase is formed of particles having a particle size of 0.1 µm to 3 µm.
[4] In the all-solid-state secondary battery according to [1], a proportion of the secondary phase present in contact with a part of the interface between the negative electrode layer and the solid electrolyte layer is larger than a proportion of the secondary phase present in contact with a part of an interface between the positive electrode layer and the solid electrolyte layer.
[5] In the all-solid-state secondary battery according to [1], a sum of a volume of the primary phase and a volume of the secondary phase in the solid electrolyte layer is equal to or greater than 90 vol%.
[6] In the all-solid-state secondary battery according to any one of [1] to [3], the negative electrode layer contains any one metal selected from a group consisting of Ag, Pd, Au, and Pt.

### Advantageous Effects of Invention

The all-solid-state secondary battery according to the present invention includes the primary phase (a first phase) including the electrolyte represented by Expression (1) and the secondary phase (a second phase) including a boron-containing compound containing lithium, boron, and oxygen, and the secondary phase is present in contact with a part of an interface between the negative electrode layer and the solid electrolyte layer. In the all-solid-state secondary battery according to the present invention, since the secondary phase in the solid electrolyte layer serves as a starting point of a reaction in releasing and receiving ions, the capacity is large.

### Brief Description of Drawings

[FIG. 1] a sectional view schematically illustrating an example of an all-solid-state secondary battery according to the present invention.
[FIG. 2] an enlarged sectional view schematically illustrating a part of the all-solid-state secondary battery 10 illustrated in FIG. 1.
[FIG. 3] a sectional view schematically illustrating another example of the all-solid-state secondary battery according to the present invention.

### Description of Embodiments

The inventors studied earnestly with a focus on a solid electrolyte layer to achieve the aforementioned objective and to provide an all-solid-state secondary battery having a large capacity as will be described below.

First, the inventors studied use of an electrolyte represented by Expression (1) and a boron-containing compound as materials of a solid electrolyte layer.

Li₃₊ₓSiₓP₁₋ₓO₄ (1)

(where 0<x<1 is satisfied in Expression (1))

In Non-Patent Document 1, an all-solid-state lithium-ion secondary battery using an electrolyte represented by Expression (1), Li₂CO₃ which is a lithium compound, and H₃BO₄ which is a boron compound as materials of a solid electrolyte layer is described. However, in the technique described in Non-Patent Document 1, an all-solid-state secondary battery having a large capacity is not obtained.

Therefore, the inventors studied more with a focus on a chemical composition and a distribution of a boron-containing compound included in a solid electrolyte layer.

As a result, the inventors found that a solid electrolyte layer has only to be manufactured such that the solid electrolyte layer includes a primary phase including the electrolyte represented by Expression (1) and a secondary phase including a boron-containing compound containing lithium, boron, and oxygen and the secondary phase is present in contact with a part of an interface between the negative electrode layer and the solid electrolyte layer, and the inventors achieved the present invention.

In an all-solid-state secondary battery including such a solid electrolyte layer, the secondary phase which is present in contact with a part of an interface between the negative electrode layer and the solid electrolyte layer serves as a starting point of a reaction in releasing and receiving lithium ions. As a result, it is assumed that an all-solid-state secondary battery having a large capacity is obtained.

In Non-Patent Document 1, an all-solid-state secondary battery manufactured using a boron-containing compound containing lithium, boron, and oxygen such as lithium borate as a material of the solid electrolyte layer and a capacity thereof are not described, and a capacity enhancement effect in an all-solid-state secondary battery manufactured using a boron-containing compound containing lithium, boron, and oxygen as a material of the solid electrolyte layer has not been ascertained in the related art.

Hereinafter, an all-solid-state secondary battery according to an embodiment will be described in detail with appropriate reference to the accompanying drawings. In the drawings used in the following description, feature parts may be conveniently enlarged for the purpose of easy understanding of features of the present invention, and dimensional ratios and the like of constituents may be different from actual ones. Materials, dimensions, and the like mentioned in the following description are merely examples, and the present invention is not limited thereto and can be appropriately modified as long as advantageous effects of the present invention can be achieved.

### [All-solid-state secondary battery]

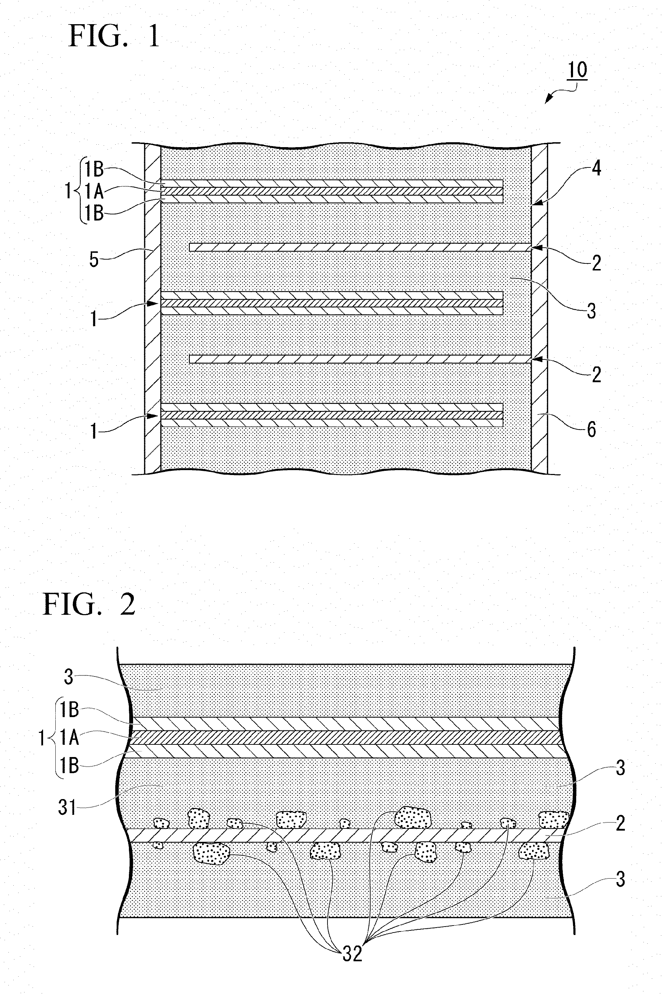

FIG. 1 is a sectional view schematically illustrating an example of an all-solid-state secondary battery according to the present invention. FIG. 2 is an enlarged sectional view schematically illustrating a part of the all-solid-state secondary battery illustrated in FIG. 1.

In FIG. 1, reference sign 10 denotes an all-solid-state secondary battery according to this embodiment. The all-solid-state secondary battery 10 illustrated in FIG. 1 includes a laminate 4, a first external terminal 5, and a second external terminal 6. The first external terminal 5 and the second external terminal 6 are formed of a conductive material. The first external terminal 5 and the second external terminal 6 are in contact with opposite surfaces of the laminate 4. The first external terminal 5 and the second external terminal 6 extend in a direction crossing (perpendicular to) a stacking surface of the laminate 4.

The laminate 4 includes a positive electrode layer 1, a negative electrode layer 2, and a solid electrolyte layer 3 interposed between the positive electrode layer 1 and the negative electrode layer 2. The laminate 4 is a sintered body formed by stacking the positive electrode layer 1 and the negative electrode layer 2 with the solid electrolyte layer 3 interposed therebetween and sintering the resultant body. The number of layers in each of the positive electrode layer 1 and the negative electrode layer 2 included in the laminate 4 may be one or two or more. As illustrated in FIG. 1, the solid electrolyte layer 3 is present between the positive electrode layer 1 and the second external terminal 6 and between the negative electrode layer 2 and the first external terminal 5 in addition to between the positive electrode layer 1 and the negative electrode layer 2. As illustrated in FIG. 1, one end of the positive electrode layer 1 is connected to the first external terminal 5. One end of the negative electrode layer 2 is connected to the second external terminal 6.

The all-solid-state secondary battery 10 is charged or discharged through release and reception of ions via the solid electrolyte layer 3 between the positive electrode layer 1 and the negative electrode layer 2. In this embodiment, the laminated all-solid-state secondary battery 10 illustrated in FIG. 1 will be described as an example.

### "Solid electrolyte layer"

The solid electrolyte layer 3 can move ions on the basis of an electric field which is externally applied. For example, the solid electrolyte layer 3 transmits lithium ions and blocks movement of electrons. The solid electrolyte layer 3 includes a primary phase including a solid electrolyte represented by Expression (1) and a secondary phase including a boron-containing compound containing lithium, boron, and oxygen:

Li₃₊ₓSiₓP₁₋ₓO₄ (1)

(where 0<x<1 is satisfied in Expression (1)).

The primary phase includes the solid electrolyte represented by Expression (1). The solid electrolyte represented by Expression (1) is a compound which is relatively stable to an active material even when it is sintered at a high temperature for densification. Accordingly, the all-solid-state secondary battery 10 according to this embodiment is less likely to deteriorate and has high reliability. The solid electrolyte represented by Expression (1) satisfies 0<x<1 and more preferably satisfies 0.3≤x≤0.8 for the purpose of a solid electrolyte which is more stable to an active material. The solid electrolyte represented by Expression (1) and forming the primary phase may include only one type or may include two or more types of solid electrolytes in which x in Expression (1) varies, and can be appropriately determined according to needs such as characteristics required for the all-solid-state secondary battery 10.

The primary phase may consist of the solid electrolyte represented by Expression (1). The primary phase may include a compound other than the electrolyte represented by Expression (1) to the extent that the effects of the present invention are not impaired. Examples of the compound other than the electrolyte represented by Expression (1) include known compounds which are used as a solid electrolyte. Specifically, compounds in which a part of P in Expression (1) is replaced with at least one type of element selected from a group constituting of Ti, Co, Mn, and Ni may be used.

The primary phase may include, for example, a sintering additive and a compound and/or an element originating from an active material forming the positive electrode layer 1 and/or the negative electrode layer 2.

The secondary phase includes a boron-containing compound containing lithium, boron, and oxygen. The boron-containing compound forming the secondary phase has only to include lithium, boron, and oxygen and may also be a compound including elements such as phosphorus and carbon in addition to lithium, boron, and oxygen. The boron-containing compound is preferably a sintered body, and examples thereof include Li₃BO₃, LiBO₂, B₄Li₂O₇, and LiBPO₄. The boron-containing compound may be glass including lithium, boron, and oxygen. The boron-containing compound forming the secondary phase can enhance the capacity of the all-solid-state secondary battery 10, and is preferably Li₃BO₃. The boron-containing compound forming the secondary phase may include only one type or two or more types and can be appropriately determined according to needs such as characteristics required for the all-solid-state secondary battery 10.

In this embodiment, the electrolyte represented by Expression (1) and a compound which will be the boron-containing compound containing lithium, boron, and oxygen which are the materials of the solid electrolyte layer 3 may include a sintering additive for reasons of manufacturing such as productivity enhancement and yield enhancement at the time of forming the solid electrolyte layer 3. In this case, the primary phase of the solid electrolyte layer 3 may include a compound and/or an element originating from the sintering additive which is not removed but is left in a sintering step for manufacturing the laminate 4 instead of the compound including lithium, boron, and oxygen. In this case, the secondary phase may include a compound and/or an element originating from the sintering additive which is not removed but is left in a sintering step for manufacturing the laminate 4 instead of the compound including lithium, boron, and oxygen.

The sintering additive is not particularly limited as long as it has a sintering property improvement effect, and a known one can be used. Specific examples of the sintering additive are compounds including zinc (Zn), bismuth (Bi), and the like.

The solid electrolyte layer 3 in the all-solid-state secondary battery 10 according to this embodiment includes a primary phase 31 that is formed in a layered shape in all the area between the positive electrode layer 1 and the negative electrode layer 2 and a plurality of areas of secondary phase 32 formed in particulate shapes as illustrated in FIG. 2.

In the solid electrolyte layer 3 in the all-solid-state secondary battery 10 according to this embodiment, the secondary phase 32 is present in contact with a part of an interface between the negative electrode layer 2 and the solid electrolyte layer 3. As a result, the capacity of the all-solid-state secondary battery 10 according to this embodiment is larger than, for example, that of an all-solid-state secondary battery in which the secondary phase is present in the whole interface of the solid electrolyte layer 3 with the negative electrode layer 2 and that of an all-solid-state secondary battery in which the secondary phase is substantially uniformly present in the whole solid electrolyte layer 3.

The reason why the capacity of the all-solid-state secondary battery increases is not certain, and, for example, it is estimated that the reason is that the secondary phase 32 in the solid electrolyte layer 3 serves as a starting point of a reaction in releasing and receiving lithium ions.

In the all-solid-state secondary battery 10 according to this embodiment, all the areas of the secondary phase 32 included in the solid electrolyte layer 3 are preferably present in contact with the interface between the negative electrode layer 2 and the solid electrolyte layer 3. In this case, since all the areas of the secondary phase 32 serve as a starting point of a reaction in releasing and receiving lithium ions in the solid electrolyte layer 3, the all-solid-state secondary battery 10 has a larger capacity. In the all-solid-state secondary battery 10 according to this embodiment, a secondary phase 32 not in contact with the interface between the negative electrode layer 2 and the solid electrolyte layer 3 may be present within a range in which effects of the present invention are achieved.

The secondary phase 32 may include a plurality of particles (lumps). A part of a group of the plurality of particles may be in contact with an interface between the solid electrolyte layer 3 and the positive electrode layer 1. In this case, a proportion (a volume proportion) of secondary-phase particles in contact with a part of the interface between the negative electrode layer and the solid electrolyte layer among the plurality of particles may be greater than a proportion of secondary-phase particles in contact with a part of the interface between the positive electrode layer and the solid electrolyte layer.

Among the secondary-phase particles included in the solid electrolyte layer, a ratio of the proportion (volume proportion) of the secondary-phase particles in contact with a part of the interface between the negative electrode layer and the solid electrolyte layer to the proportion (volume proportion) of the secondary-phase particles in contact with a part of the interface between the positive electrode layer and the solid electrolyte layer may be equal to or greater than 1 or equal to or greater than 1.5.

In the solid electrolyte layer 3 in the all-solid-state secondary battery 10 according to this embodiment, since the primary phase 31 is formed in a layered shape in the whole area between the positive electrode layer 1 and the negative electrode layer 2, the secondary phase 32 is not in contact with the positive electrode layer 1. As a result, the secondary phase 32 effectively serves as a starting point of a reaction in releasing and receiving lithium ions in the solid electrolyte layer 3, and thus the all-solid-state secondary battery 10 has a larger capacity.

The shape and the size of the secondary phase 32 included in the solid electrolyte layer 3 are not particularly limited, and the secondary phase 32 may have, for example, a thin-piece shape or a particulate shape as illustrated in FIG. 2. When a plurality of areas of the second phase 32 are present in the solid electrolyte layer 3 as illustrated in FIG. 2, the shapes and the sizes of the plurality of areas of the second phase 32 may be substantially regular or irregular.

When a plurality of areas of the secondary phase 32 in a particulate shape are dispersed as dots along the interface between the solid electrolyte layer 3 and the negative electrode layer 2 as illustrated in FIG. 2, the secondary phase 32 serves as a starting point of a reaction in releasing and receiving lithium ions in the solid electrolyte layer 3, and thus the all-solid-state secondary battery 10 has a larger capacity.

The secondary phases 32 (the areas of the secondary phase 32) present in the solid electrolyte layer 3 are preferably particles having an average particle size of 0.1 µm to 3 µm and more preferably particles having an average particle size of 0.1 µm to 1 µm. In a case where the secondary phases 32 are particles having an average particle size of 0.1 µm to 3 µm, the specific surface area of the secondary phase 32 is sufficiently large. Accordingly, the secondary phases 32 more effectively serves as a starting point of a reaction in releasing and receiving lithium ions. In a case where the secondary phases 32 are particles having an average particle size of 0.1 µm to 3 µm, ion conductivity of the primary phase 31 is less likely to be hindered by the secondary phase 32. For this reason, in a case where the secondary phases 32 are particles having an average particle size of 0.1 µm to 3 µm, the all-solid-state secondary battery 10 has a larger capacity.

The volume proportion of the secondary phase 32 included in the solid electrolyte layer 3 is preferably equal to or greater than 1 vol% and equal to or less than 10 vol%, more preferably equal to or greater than 1 vol% and equal to or less than 5 vol%, and still more preferably equal to or greater than 1 vol% and equal to or less than 3 vol%. In a case where the volume proportion of the secondary phase 32 is equal to or greater than 1 vol%, the secondary phase 32 is sufficiently present in the solid electrolyte layer 3, and thus the secondary phase 32 more effectively serves as a starting point of a reaction in releasing and receiving lithium ions. Accordingly, the capacity of the all-solid-state secondary battery 10 becomes larger. In a case where the volume proportion of the secondary phase 32 is equal to or greater than 1 vol%, the secondary phase 32 formed by coupling compounds which will be boron-containing compounds containing lithium, boron, and oxygen through sintering is likely to be particles having a particle size of 0.1 µm or more, which is preferable. In a case where the volume proportion of the secondary phase 32 is equal to or less than 10 vol%, the secondary phase 32 divided in an in-plane direction is likely to be formed by coupling compounds which will be boron-containing compounds containing lithium, boron, and oxygen through sintering. As a result, a plurality of areas of the secondary phase 32 in particulate shapes are dispersed as dots along the interface between the solid electrolyte layer 3 and the negative electrode layer 2, the solid electrolyte layer 3 in which the primary phase 31 is provided between the neighboring areas of the secondary phase 32 and between the areas of the secondary phase 32 and a positive-electrode active material layer 1B is likely to be formed, and the capacity of the all-solid-state secondary battery 10 becomes larger. In a case where the volume proportion of the secondary phase 32 is equal to or less than 10 vol%, the secondary phase 32 formed by coupling compounds which will be boron-containing compounds containing lithium, boron, and oxygen through sintering are likely to be particles having a particle size of 3 µm or less, which is preferable.

A sum of the volume of the primary phase 31 and the volume of the secondary phase 32 in the solid electrolyte layer 3 may be equal to or greater than 90 vol%. The sum may be equal to or less than 100 vol%.

### "Positive electrode layer"

As illustrated in FIG. 1, the positive electrode layer 1 includes, for example, a positive-electrode current collector 1A and a positive-electrode active material layer 1B. The positive-electrode active material layer 1B may be formed on both surfaces of the positive-electrode current collector 1A as illustrated in FIG. 1 or may be formed on only one surface.

### (Positive-electrode current collector)

The positive-electrode current collector 1A has high electrical conductivity. The positive-electrode current collector 1A includes, for example, a conductive material such as a metal such as silver, palladium, gold, platinum, aluminum, copper, nickel, stainless steel, or iron, an alloy thereof, and a conductive resin. The positive-electrode current collector 1A may include, for example, a positive-electrode active material such as a lithium cobalt oxide (LiCoO₂) or a lithium vanadium compound (LiV₂O₅, Li₃V₂(PO₄)₃, LiVOPO₄).

### (Positive-electrode active material layer)

The positive-electrode active material layer 1B includes a positive-electrode active material. The positive-electrode active material layer 1B may include a conductive assistant and a solid electrolyte.

### (Positive-electrode active material)

The positive-electrode active material is not particularly limited as long as release and insertion of lithium ions and desorption and insertion of lithium ions can progress reversibly. For example, a positive-electrode active material used in a known lithium-ion secondary battery can be used.

For example, the positive-electrode active material is preferably one type or two or more types selected from complex transition metal oxides and transition metal complex oxides.

Examples of the positive-electrode active material include a lithium cobalt oxide (LiCoO₂), a lithium nickel oxide (LiNiO₂), a lithium manganese spinel (LiMn₂O₄), a complex metal oxide represented by a formula: LiNiₓCo_{y}Mn_{z}MₐO₂ (x+y+z+a=1, 0≤x≤1, 0≤y≤1, 0≤z≤1, 0≤a≤1, M is one or more elements selected from Al, Mg, Nb, Ti, Cu, Zn, and Cr), and a lithium titanate (Li₄Ti₅O₁₂).

A positive-electrode active material not including lithium may be used as the positive-electrode active material. The positive-electrode active material not including lithium can be utilized by providing a negative-electrode active material doped with metal lithium and/or lithium ions in the negative electrode layer 2 in advance and starting discharging of the all-solid-state secondary battery 10. An example of the positive-electrode active material not including lithium is a metal oxide (such as MnO₂ or V₂O₅).

### (Conductive assistant)

The conductive assistant is not particularly limited as long as electron conductivity in the positive-electrode active material layer 1B can be improved, and known conductive assistants can be used. Examples of the conductive assistant include carbon-based materials such as graphite, carbon black, graphene, and carbon nanotubes, metals such as gold, platinum, silver, palladium, aluminum, copper, nickel, stainless steel, and iron, conductive oxide such as indium tin oxide (ITO), and mixtures thereof. The conductive assistant may be in the form of powder or fibers.

### (Solid electrolyte)

The solid electrolyte included in the positive-electrode active material layer 1B enhances ion conductivity in the positive-electrode active material layer 1B. One type of known material or two or more types of known materials as a mixture can be used as the solid electrolyte. The same compound as the compound forming the solid electrolyte layer 3 may be included as the solid electrolyte.

### "Negative electrode layer"

The negative electrode layer 2 illustrated in FIG. 1 serves as both a negative-electrode current collector and a negative-electrode active material layer. The negative electrode layer 2 has a lower potential than the positive-electrode active material. The negative electrode layer 2 preferably includes any one metal selected from a group constituting of silver (Ag), palladium (Pd), gold (Au), and platinum (Pt). This is because Ag, Pd, Au, and Pt are not melted even when a sintering step for manufacturing the laminate 4 is performed in the atmosphere and are not likely to oxidize. The negative electrode layer 2 may be formed of any one metal of the aforementioned metals or may be formed of an alloy including any one of the aforementioned metals.

The negative electrode layer 2 preferably includes an AgPd alloy. This is because the secondary phase 32 included in the solid electrolyte layer 3 in contact with the negative electrode layer 2 serves as a starting point of a reaction in releasing and receiving lithium ions more effectively, and the capacity becomes larger. In a case where the negative electrode layer 2 includes an AgPd alloy, the energy density of the all-solid-state secondary battery 10 becomes higher, which is preferable. For example, an alloy including Ag and Pd at a molar ratio of 8:2 (Ag:Pd) can be used as the AgPd alloy.

The negative electrode layer 2 may include metal particles of any one metal of the aforementioned metals and/or alloy particles of an alloy including any one of the aforementioned metals, and one or more types selected from a conductive assistant and a solid electrolyte.

### (Conductive assistant)

The conductive assistant enhances electron conductivity in the negative electrode layer 2. The same material as that in the positive-electrode active material layer 1B can be used as the conductive assistant.

### (Solid electrolyte)

The solid electrolyte included in the negative electrode layer 2 enhances ion conductivity in the negative electrode layer 2. One type of known material or two or more types of known materials as a mixture can be used as the solid electrolyte. The same compound as the compound forming the solid electrolyte layer 3 may be included as the solid electrolyte.

### [Method for manufacturing all-solid-state secondary battery]

A method for manufacturing the all-solid-state secondary battery 10 according to this embodiment will be described below.

First, a laminate 4 is manufactured. The laminate 4 can be manufactured by, for example, a simultaneous sintering method or a sequential sintering method and is preferably manufactured by the simultaneous sintering method. The simultaneous sintering method is a method which includes: stacking materials for forming each of the layers; and then conducting batch sintering to manufacture the laminate 4. The sequential sintering method is a method of performing sintering whenever each layer is formed. The laminate 4 can be manufactured through smaller steps using the simultaneous sintering method than using the sequential sintering method. The laminate 4 manufactured using the simultaneous sintering method is denser than the laminate 4 manufactured using the sequential sintering method. The method for manufacturing the laminate 4 will be described below with reference to an example in which the laminate 4 is manufactured using the simultaneous sintering method.

First, the materials of each of the positive-electrode current collector 1A, the positive-electrode active material layer 1B, the solid electrolyte layer 3, and the negative electrode layer 2 forming the laminate 4 are made into pastes, that is, pastes corresponding to the materials of each of the layers are manufactured.

In this embodiment, a first paste including the electrolyte represented by Expression (1) and a second paste including a compound which will be a boron-containing compound containing lithium, boron, and oxygen are manufactured as the paste of the solid electrolyte layer 3. The first paste is used to form the primary phase 31. The second paste is used to form the secondary phase 32.

The first paste is obtained, for example, by making particles of the electrolyte represented by Expression (1) and a sintering additive added according to needs into a paste. The particles of the electrolyte represented by Expression (1) can be manufactured using a known manufacturing method.

The second paste is obtained, for example, by making particles of a boron-containing compound containing lithium, boron, and oxygen and a sintering additive added according to needs into a paste. The second paste may include particles of the electrolyte represented by Expression (1) according to needs.

The particles of the boron-containing compound containing lithium, boron, and oxygen which are used as the material of the second paste have, for example, an average particle size from 0.01 µm to 10 µm and preferably have an average particle size from 0.1 µm to 3 µm. In a case where the average particle size is equal to or greater than 0.01 µm, the particles of boron-containing compound containing lithium, boron, and oxygen are less likely to be coagulated when the particles of the boron-containing compound containing lithium, boron, and oxygen are made into a paste, which is preferable. In a case where the average particle size is equal to or less than 10 µm, a plurality of the secondary phases 32 (areas of the secondary phase 32) in which the average particle size is sufficiently small and the specific surface area is large are likely to be formed. As a result, the function of the secondary phase 32 as a starting point of a reaction in releasing and receiving lithium ions can be more effectively achieved. The average particle size can be appropriately determined according to compositions and particle sizes of the secondary phase 32, heating temperature and sintering time in the sintering step, and the like.

The method of making each of the materials used to manufacture the laminate 4 into pastes is not particularly limited, and, for example, a method of obtaining a paste by mixing powders of each of the materials in a vehicle can be used. The vehicle is a generic term of a medium in a liquid phase. The vehicle in this embodiment includes a solvent, a binding material (a binder), and a plasticizer. For example, dihydroperpineol can be used as the solvent. For example, ethyl cellulose can be used as the binder.

Then, green sheets are manufactured. A green sheet is obtained by applying the paste manufactured for each material on a substrate formed of a polyethylene terephthalate (PET) film, drying the paste according to needs, and removing the substrate. The paste applying method is not particularly limited, and, for example, a known method such as screen printing, coating, transferring, or doctor blade can be used.

Then, the green sheets manufactured for the materials are stacked in a desired sequence and a desired number of layers to manufacture a laminated sheet. Alignment, cutting, and the like are performed according to needs when the green sheets are stacked. For example, in a case where a parallel type or series-parallel type battery is manufactured, it is preferable that alignment is performed such that an end face of the positive-electrode current collector 1A and an end face of the negative-electrode current collector 2A do not match, and the green sheets are stacked.

The green sheets which will be the laminated sheet may be green sheets which will be a solid electrolyte layer unit, a positive electrode unit, and the negative electrode layer 2 and which are manufactured in advance.

In the procedure of manufacturing the positive electrode unit, first, the paste for the positive-electrode active material layer 1B is printed on the substrate formed of a PET film through screen printing and is dried to form the positive-electrode active material layer 1B. Then, the paste for the positive-electrode current collector 1A is printed on the positive-electrode active material layer 1B through screen printing and is dried to form the positive-electrode current collector 1A. Then, the paste for the positive-electrode active material layer 1B is printed on the positive-electrode current collector 1A through screen printing and is dried to form the positive-electrode active material layer 1B. Thereafter, the positive electrode unit is obtained by removing the PET film. The positive electrode unit is a green sheet in which the positive-electrode active material layer 1B, the positive-electrode current collector 1A, and the positive-electrode active material layer 1B are stacked in this order.

Regarding the solid electrolyte layer unit, the first paste is applied to the substrate formed of a PET film using a doctor blade method and is dried to form a sheet shape. Then, the second paste is applied to the sheet formed using the first paste using the doctor blade method and is dried to form a sheet shape. The solid electrolyte layer unit is a green sheet in which the sheet formed using the first paste and the sheet formed using the second paste are stacked.

Then, the formed positive electrode unit and the green sheet which will be the negative electrode layer 2 are stacked with the solid electrolyte layer unit interposed therebetween. At this time, the sheet formed using the second paste in the solid electrolyte layer unit is disposed and stacked such that the sheet faces the green sheet which will be the negative electrode layer 2. Accordingly, a laminated sheet in which the positive-electrode active material layer 1B, the positive-electrode current collector 1A, the positive-electrode active material layer 1B, the sheet formed using the first paste, the sheet formed using the second paste, the green sheet which will be the negative electrode layer 2, the sheet formed using the second paste, and the sheet formed using the first paste are stacked in this order is obtained.

When the positive electrode unit, the solid electrolyte layer unit, and the green sheet which will be the negative electrode layer 2 are stacked, they are stacked while alternately mismatching them such that the positive electrode unit extends to only one end face of the laminated sheet and the green sheet which will be the negative electrode layer 2 extends to only the opposite end face of the laminated sheet.

Then, the formed laminated sheet is pressed together to enhance adhesiveness between the layers and to form a laminate. The pressing may be performed by, for example, mold pressing, warm water isotropic pressing (WIP), cold-water isotropic pressing (CIP), or isostatic pressing. The pressing is preferably performed while heating. The heating temperature at the time of pressing can be set to be, for example, in a range of 40°C to 95°C.

Subsequently, the laminated substrate obtained through the pressing is cut to obtain laminated chips using a dicing machine. Thereafter, the obtained laminated chips are subjected to de-bindering and sintering. Thereby, a laminate 4 consisting of a sintered body is obtained.

The de-bindering and the sintering can be performed, for example, in a state in which the laminate is placed on a ceramic base. The de-bindering and the sintering may be, for example, heating at a temperature of 550°C to 1100°C in the atmosphere. The heating time (the sintering time) can be set to be, for example, in a range of 0.1 hours to 6 hours. The heating temperature and the sintering time in the de-bindering and the sintering can be appropriately determined according to the composition of each of the layers of the laminate 4.

In this embodiment, by performing de-bindering and sintering, particles of the boron-containing compound containing lithium, boron, and oxygen which are included in the second paste are bonded and unified. Thereby, the sheet formed using the second paste (a coating film formed on the sheet formed using the first paste) which is disposed to face the negative electrode layer 2 is subdivided in an in-plane direction, the particulate secondary phase 32 is generated, and the primary phase 31 is formed between the neighboring areas of the secondary phase 32. The boron-containing compound containing lithium, boron, and oxygen which will be the secondary phase 32 is not likely to be dissolved in the electrolyte represented by Expression (1) which will be the primary phase 31 and also serves as a sintering additive of the solid electrolyte layer 3. As a result, the solid electrolyte layer 3 in which a plurality of particulate secondary phases 32 (particulate areas of the secondary phase 32) are dispersed as dots along the interface between the solid electrolyte layer 3 and the negative electrode layer 2 and the primary phase 31 is disposed between the neighboring areas of the secondary phase 32 and between the second phase 32 and the positive-electrode active material layer 1B is formed.

The heating temperature in the de-bindering and sintering step is preferably in a range of 550°C to 1100°C and more preferably in a range of 600°C to 1000°C. In a case where the heating temperature in the de-bindering and sintering step is equal to or higher than 550°C, bonding between the particles of the boron-containing compound containing lithium, boron, and oxygen included in the second paste is promoted. Thereby, the sheet formed using the second paste disposed to face the negative electrode layer 2 is likely to be subdivided in the in-plane direction. As a result, the solid electrolyte layer 3 in which a plurality of particulate areas of the secondary phase 32 are dispersed as dots along the interface between the solid electrolyte layer 3 and the negative electrode layer 2 and the primary phase 31 is disposed between the neighboring areas of the secondary phase 32 and between the second phase 32 and the positive-electrode active material layer 1B is likely to be formed. In a case where the heating temperature in the sintering step is equal to or less than 1100°C, the boron-containing compound containing lithium, boron, and oxygen which will be the secondary phase 32 and the electrolyte represented by Expression (1) which will be the primary phase 31 can be prevented from being a solid solution.

The sintered laminate 4 (sintered body) may be ground using a method of putting the sintered laminate 4 into a cylindrical vessel together with an abrasive such as alumina and performing barrel grinding. Thereby, chamfering of corners of the laminate 4 can be performed. Polishing of the laminate 4 may be performed using a sand blast. The sand blast can cut only a specific part of the surface of the laminate 4, which is preferable.

Then, the first external terminal 5 and the second external terminal 6 are formed on the opposite side surfaces of the formed laminate 4. The first external terminal 5 and the second external terminal 6 can be formed using a method such as a sputtering method, a dipping method, a screen printing method, and a spray coating method.

Through the aforementioned steps, it is possible to manufacture an all-solid-state secondary battery 10.

In this embodiment, one or more of the following conditions (1) to (7) in the method for manufacturing the all-solid-state secondary battery 10 are appropriately modified. Thereby, it is possible to obtain an all-solid-state secondary battery 10 including the solid electrolyte layer 3 in which the volume proportion of the secondary phase 32 and the particle sizes of the secondary phase 32 are in desired ranges.

(1) A composition of particles of the boron-containing compound containing lithium, boron, and oxygen which are included in the second paste.
(2) An average particle size of particles of the boron-containing compound containing lithium, boron, and oxygen which are included in the second paste.
(3) A composition of particles of the electrolyte represented by Expression (1) in a case where the second paste includes the particles of the electrolyte represented by Expression (1).
(4) A ratio of the particles of the electrolyte represented by Expression (1) and the particles of the boron-containing compound containing lithium, boron, and oxygen which are included in the second paste in a case where the second paste includes the particles of the electrolyte represented by Expression (1).
(5) A thickness ratio of the sheet formed using the first paste and the sheet formed using the second paste.
(6) A composition of particles of the electrolyte represented by Expression (1) which are included in the first paste.
(7) A heating temperature and a sintering time in the de-bindering and sintering step.

In this embodiment, particles of one type of compound or two or more types of compounds which will be the boron-containing compound containing lithium, boron, and oxygen through sintering and/or one type of element or two or more types of elements which will be the boron-containing compound containing lithium, boron, and oxygen through sintering may be used instead of the particles of the boron-containing compound containing lithium, boron, and oxygen included in the second paste or in addition to the particles of the boron-containing compound containing lithium, boron, and oxygen.

Examples of the compound and/or element which will be the boron-containing compound containing lithium, boron, and oxygen used as the material of the second paste include a boron oxide, a boric acid, a boron hydroxide, a lithium borate, a lithium oxide, a lithium carbonate, and a lithium phosphate. Particles (powder) of the compound and/or particles (powder) of the element which will be the boron-containing compound can be manufactured using a known manufacturing method, and one type or two or more types as a mixture can be used according to the composition of the boron-containing compound containing lithium, boron, and oxygen which is a targeted product.

The average particle size of the particles of the compound and/or element which will be the boron-containing compound containing lithium, boron, and oxygen is, for example, in a range of 0.01 µm to 10 µm and preferably in a range of 0.1 µm to 3 µm. In a case where the average particle size is equal to or greater than 0.01 µm, the particles of the compound and/or element are not likely to be coagulated in a paste at the time of making the particles of the compound and/or element into the paste, which is preferable. In a case where the average particle size is equal to or less than 10 µm, the specific surface area of the particles is sufficiently large and thus a reaction of producing the boron-containing compound containing lithium, boron, and oxygen is carried out well in the sintering step, which is preferable. In a case where the average particle size is equal to or less than 10 µm, the average particle size is sufficiently small, and a plurality of areas of the secondary phase 32 having a large specific surface area are likely to be produced. As a result, the function of the secondary phase 32 as a starting point of a reaction in releasing and receiving lithium ions can be more effectively obtained. The average particle size can be appropriately determined according to the composition and the particle sizes of the secondary phases 32, the heating temperature and the sintering time in the sintering step, and the like.

The all-solid-state secondary battery 10 according to this embodiment illustrated in FIGS. 1 and 2 includes a sintered body including a positive electrode layer 1, a negative electrode layer 2, and a solid electrolyte layer 3 interposed between the positive electrode layer 1 and the negative electrode layer 2, and the solid electrolyte layer 3 includes a primary phase 31 including the electrolyte represented by Expression (1) and a secondary phase 32 including the boron-containing compound containing lithium, boron, and oxygen. The secondary phase 32 is present in contact with a part of an interface between the negative electrode layer 2 and the solid electrolyte layer 3. Accordingly, in the all-solid-state secondary battery 10 according to this embodiment, the secondary phase 32 in the solid electrolyte layer 3 serves as a starting point of a reaction in releasing and receiving lithium ions. As a result, it is possible to provide an all-solid-state secondary battery 10 having a large capacity.

While an embodiment of the present invention has been described above in detail with reference to the drawings, the configurations in the embodiments and combinations thereof are only examples, and addition, omission, replacement, and other modification of a configuration are possible without departing from the features of the present invention.

For example, in the all-solid-state secondary battery 10 according to the aforementioned embodiment, the negative electrode layer 2 serves as both a negative-electrode current collector and a negative-electrode active material layer as illustrated in FIG. **1****,** but the negative electrode layer in the all-solid-state secondary battery according to the present invention may separately include a negative-electrode current collector and a negative-electrode active material layer.

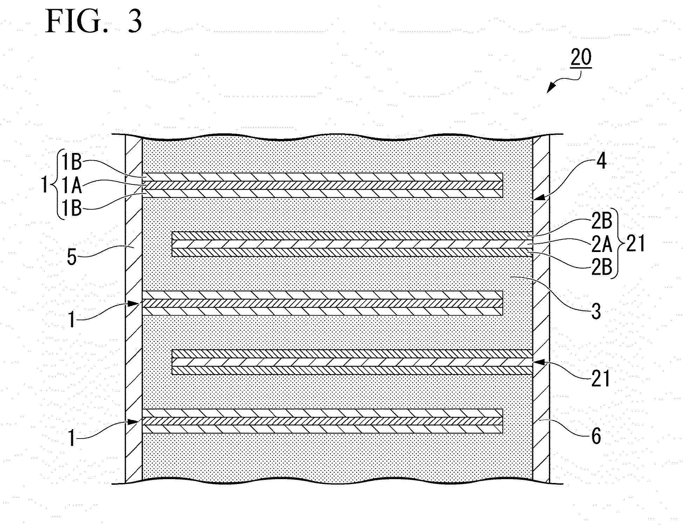

FIG. 3 is a sectional view schematically illustrating another example of the all-solid-state secondary battery according to the present invention. In the all-solid-state secondary battery 20 illustrated in FIG. 3, the same members as in the all-solid-state secondary battery 10 illustrated in FIG. 1 will be referred to by the same reference signs, and description thereof will be omitted. The all-solid-state secondary battery 20 illustrated in FIG. 3 is different from the all-solid-state secondary battery 10 illustrated in FIG. 1 in only a negative electrode layer 21.

The negative electrode layer 21 in the all-solid-state secondary battery 20 illustrated in FIG. 3 includes, for example, a negative-electrode current collector 2A and a negative-electrode active material layer 2B. The negative-electrode active material layer 2B may be formed on both surfaces of the negative-electrode current collector 2A as illustrated in FIG. 3 or may be formed on only one surface thereof.

### (Negative-electrode current collector)

The negative-electrode current collector 2A is the same as the positive-electrode current collector 1A. Specifically, for example, a conductive material such as a metal such as silver, palladium, gold, platinum, aluminum, copper, nickel, stainless steel, or iron, an alloy thereof, and a conductive resin can be used as the negative-electrode current collector 2A.

### (Negative-electrode active material layer)

The negative-electrode active material layer 2B includes a negative-electrode active material. The negative-electrode active material layer 2B may include a conductive additive and a solid electrolyte. Those included in the negative electrode layer 2 of the all-solid-state secondary battery 10 illustrated in FIG. 1 can be used as a conductive assistant and a solid electrolyte which may be included in the negative-electrode active material layer 2B.

### (Negative-electrode active material)

The negative-electrode active material is a compound that enables insertion and release of ions. The negative-electrode active material is a compound having a lower potential than the positive-electrode active material. The same material as the positive-electrode active material can be used as the negative-electrode active material. The negative-electrode active material and the positive-electrode active material used in the all-solid-state secondary battery 10 are determined in consideration of the potential of the negative-electrode active material and the potential of the positive-electrode active material.

The all-solid-state secondary battery 20 illustrated in FIG. 3 can be manufactured, for example, the following method.

That is, the all-solid-state secondary battery 20 can be manufactured using the same method as in the method for manufacturing the all-solid-state secondary battery 10 illustrated in FIGS. 1 and 2 except that a negative electrode unit described below is used instead of the green sheet which will be the negative electrode layer 2 and which is manufactured in the aforementioned embodiment.

The negative electrode unit can be manufactured in the same sequence as in the positive electrode unit manufactured in the aforementioned embodiment. Specifically, a paste for the negative-electrode active material layer 2B is printed on a substrate formed of a PET film through screen printing and is dried to form the negative-electrode active material layer 2B. Then, a paste for the negative-electrode current collector 2A is printed on the negative-electrode active material layer 2B through screen printing and is dried to form the negative-electrode current collector 2A. Then, the paste for the negative-electrode active material layer 2B is printed on the negative-electrode current collector 2A through screen printing and is dried to form the negative-electrode active material layer 2B. Thereafter, the negative electrode unit is obtained by removing the PET film. The negative electrode unit is a green sheet in which the negative-electrode active material layer 2B, the negative-electrode current collector 2A, and the negative-electrode active material layer 2B are stacked in this order.

Similarly to the all-solid-state secondary battery 10 illustrated in FIGS. 1 and 2, the all-solid-state secondary battery 20 illustrated in FIG. 3 includes a solid electrolyte layer 3 including a primary phase 31 including the electrolyte represented by Expression (1) and a secondary phase 32 including the boron-containing compound containing lithium, boron, and oxygen. The secondary phase 32 is present in contact with a part of an interface between the negative electrode layer 2 and the solid electrolyte layer 3. Accordingly, in the all-solid-state secondary battery 20 illustrated in FIG. 3, similarly to the all-solid-state secondary battery 10 illustrated in FIGS. 1 and 2, since the secondary phase 32 in the solid electrolyte layer 3 serves as a starting point of a reaction in releasing and receiving lithium ions, it is possible to enhance a capacity.

### Examples

### "Example 1"

### (Manufacturing paste for solid electrolyte layer)

A first paste and a second paste were manufactured as a paste for a solid electrolyte layer by the following method.

### (First paste)

Particles represented by Li₃₊ₓSiₓP₁₋ₓO₄ (where x in Expression (1) is 0.5), ethyl cellulose, and dihydroperpineol were put into a ball mill and a mixture was wet-mixed; and thereby, a first paste according to Example 1 including 15 vol% of the particles represented by Li₃₊ₓSiₓP₁₋ₓO₄ (where x in Expression (1) is 0.5) was manufactured.

### (Second paste)

Particles of Li₃BO₃ (lithium triborate) having an average particle size of 0.5 µm which were the particles of the boron-containing compound containing lithium, boron, and oxygen, ethyl cellulose, and dihydroperpineol were put into a ball mill and a mixture was wet-mixed; and thereby, a second paste according to Example 1 including 2 vol% of the particles of the boron-containing compound containing lithium, boron, and oxygen was manufactured.

### (Manufacturing positive-electrode current collector paste)

Powder of an Ag-Pd alloy including Ag and Pd at a molar ratio of 8:2 (Ag:Pd), ethyl cellulose, and dihydroperpineol were put into a ball mill and a mixture was wet-mixed; and thereby, a positive-electrode current collector paste according to Example 1 was manufactured.

### (Manufacturing positive-electrode active material layer paste)

A lithium cobalt oxide (LiCoO₂), ethyl cellulose, and dihydroperpineol were put into a ball mill and a mixture was wet-mixed; and thereby, a positive-electrode active material layer paste according to Example 1 including 15 vol% of particles of the lithium cobalt oxide (LiCoO₂) was manufactured.

### (Manufacturing negative electrode layer paste)

Powder of an Ag-Pd alloy including Ag and Pd at a molar ratio of 8:2 (Ag:Pd), ethyl cellulose, and dihydroperpineol were put into a ball mill and a mixture was wet-mixed; and thereby, a negative electrode layer paste according to Example 1 including 15 vol% of the AgPd powder was manufactured.

The ethyl cellulose used in the pastes was a binder. Dihydroperpineol was a solvent.

### (Manufacturing positive electrode unit)

The positive-electrode active material layer paste was applied in a thickness of 5 µm to a substrate formed of a polyethylene terephthalate (PET) film through screen printing and then was dried for 5 minutes at 80°C. The positive-electrode current collector paste was applied in a thickness of 5 µm to the dried positive-electrode active material layer paste through screen printing and then was dried for 5 minutes at 80°C. The positive-electrode active material layer paste was applied in a thickness of 5 µm to the dried positive-electrode current collector paste through screen printing and then was dried for 5 minutes at 80°C, and next, laminated layers were separated from the substrate. Accordingly, a positive electrode unit in which the positive-electrode active material layer, the positive-electrode current collector, and the positive-electrode active material layer were stacked in this order was obtained.

### (Manufacturing solid electrolyte layer unit)

The first paste was applied in a thickness of 20 µm to a substrate formed of a polyethylene terephthalate (PET) film through screen printing and then was dried for 10 minutes at 80°C. The second paste was applied in a thickness of 1 µm to the dried first paste through screen printing and then was dried for 5 minutes at 80°C, and next, laminated sheets were separated from the substrate. Accordingly, a solid electrolyte layer unit in which the sheet formed using the first paste and the sheet formed using the second paste were stacked was obtained.

### (Manufacturing green sheet to be negative electrode layer)

The negative electrode layer paste was applied in a thickness of 5 µm to a substrate formed of a polyethylene terephthalate (PET) film through screen printing and then was dried for 5 minutes at 80°C, and next a layer was separated from the substrate. Accordingly, a green sheet to be the negative electrode layer was obtained.

### (Manufacturing all-solid-state secondary battery)

Each of four positive electrode units and each of four green sheets to be the negative electrode layer were alternately stacked such that the solid electrolyte layer unit was interposed therebetween, and a laminated sheet to be the laminate 4 was obtained.

At this time, the sheet formed using the second paste in the solid electrolyte layer unit in the laminated sheet was disposed to face the green sheet to be the negative electrode layer. The top surface and the bottom surface of the laminated sheet were the solid electrolyte layer units. The positive electrode unit and the green sheet were shifted and stacked such that the positive electrode unit extended to only one end face of the laminated sheet and the green sheet to be the negative electrode layer extended to only the opposite end face.

Then, the manufactured laminated sheet was pressed together and was cut using a dicing machine to manufacture laminated chips. Thereafter, the laminated chips were subjected to de-bindering and sintering; and thereby, a laminate according to Example 1 including a sintered body was obtained. De-bindering of the laminated chips was performed by heating the laminated chips in the atmosphere at 500°C for 10 hours. Sintering was performed in the atmosphere at 900°C for 1 hour.

Then, a first external terminal and a second external terminal were formed on the opposite side surfaces of the manufactured laminate through Au sputtering.

The all-solid-state secondary battery 10 according to Example 1 illustrated in FIG. 1 was obtained through the aforementioned steps.

### "Example 2"

An all-solid-state secondary battery 10 according to Example 2 was obtained in the same method as in Example 1 except that the solid electrolyte layer unit was manufactured by changing the volume proportion (vol%) of the particles of the boron-containing compound containing lithium, boron, and oxygen in the second paste to three times that in Example 1.

### "Example 3"

An all-solid-state secondary battery 10 according to Example 3 was obtained in the same method as in Example 1 except that the solid electrolyte layer unit was manufactured by changing the volume proportion (vol%) of the particles of the boron-containing compound containing lithium, boron, and oxygen in the second paste to 15 times that in Example 1.

### "Example 4"

An all-solid-state secondary battery 10 according to Example 4 was obtained in the same method as in Example 1 except that the solid electrolyte layer unit was manufactured by changing the volume proportion (vol%) of the particles of the boron-containing compound containing lithium, boron, and oxygen in the second paste to 0.5 times that in Example 1.

### "Example 5"

An all-solid-state secondary battery 10 according to Example 5 was obtained in the same method as in Example 1 except that the second paste was manufactured using particles of Li₃BO₃ (lithium triborate) having an average particle size of 0.2 µm as the particles of the boron-containing compound containing lithium, boron, and oxygen.

### "Example 6"

An all-solid-state secondary battery 10 according to Example 6 was obtained in the same method as in Example 1 except that the second paste was manufactured using particles of Li₃BO₃ (lithium triborate) having an average particle size of 5 µm as the particles of the boron-containing compound containing lithium, boron, and oxygen and the solid electrolyte layer unit was manufactured by changing the volume proportion (vol%) of the particles of the boron-containing compound containing lithium, boron, and oxygen in the second paste to 0.1 times that in Example 1 and applying the second paste in a thickness of 10 µm to the dried first paste.

### "Example 7"

An all-solid-state secondary battery 10 according to Example 7 was obtained in the same method as in Example 1 except that the second paste was manufactured using particles of Li₃BO₃ (lithium triborate) having an average particle size of 0.05 µm as the particles of the boron-containing compound containing lithium, boron, and oxygen.

### "Example 8"

An all-solid-state secondary battery 10 according to Example 8 was obtained in the same method as in Example 1 except that the negative electrode layer was formed of Cu/lithium titanate (Li₄Ti₅O₁₂) and the sintering atmosphere was changed to the atmosphere of nitrogen. The negative electrode layer was formed by the following procedures.

First, lithium titanate powder, ethyl cellulose, and dihydroperpineol were put into a ball mill and a mixture was wet-mixed; and thereby, a second negative electrode paste including 15 vol% of lithium titanate particles was manufactured. Subsequently, Cu powder, ethyl cellulose, and dihydroperpineol were put into a ball mill and a mixture was wet-mixed; and thereby, a negative-electrode current collector paste including 15 vol% of Cu particles was manufactured.

Subsequently, the second negative electrode layer paste was applied in a thickness of 5 µm to a substrate formed of a polyethylene terephthalate (PET) film through screen printing and dried for 5 minutes at 80°C. Next, the negative-electrode current collector paste was applied and dried for 5 minutes. Next, the second negative-electrode layer paste was applied in a thickness of 5 µm and dried for 5 minutes at 80°C. Then the resultant layers were separated from the substrate. Accordingly, a negative electrode layer in which the second negative electrode layer, the negative-electrode current collector layer, and the second negative electrode layer were stacked in this order was obtained.

### "Example 9"

An all-solid-state secondary battery 10 according to Example 9 was obtained in the same method as in Example 1 except that a paste in which the first paste and the second paste were mixed such that the volume ratio of particles of Li₃₊ₓSiₓP₁₋ₓO₄ (where x in Expression (1) was 0.5) and particles of the boron-containing compound containing lithium, boron, and oxygen was 100:1 was used as the paste for the solid electrolyte layer instead of the first paste.

### "Example 10"

An all-solid-state secondary battery 10 according to Example 10 was obtained in the same method as in Example 1 except that the second paste was manufactured using particles of Li₃BO₃ (lithium triborate) having an average particle size of 1 µm as the particles of the boron-containing compound containing lithium, boron, and oxygen.

### "Example 11"

An all-solid-state secondary battery 10 according to Example 11 was obtained in the same method as in Example 6 except that the second paste was manufactured using particles of Li₃BO₃ (lithium triborate) having an average particle size of 3.0 µm as the particles of the boron-containing compound containing lithium, boron, and oxygen.

### "Example 12"

An all-solid-state secondary battery 10 according to Example 13 was obtained in the same method as in Example 6 except that the second paste was manufactured using particles of Li₃BO₃ (lithium triborate) having an average particle size of 3.2 µm as the particles of the boron-containing compound containing lithium, boron, and oxygen.

### "Example 13"

An all-solid-state secondary battery 10 according to Example 13 was obtained in the same method as in Example 1 except that the solid electrolyte layer unit was manufactured by changing the volume proportion (vol%) of the particles of the boron-containing compound containing lithium, boron, and oxygen in the second paste to 10 times that in Example 1.

### "Example 14"

An all-solid-state secondary battery 10 according to Example 14 was obtained in the same method as in Example 1 except that the solid electrolyte layer unit was manufactured by changing the volume proportion (vol%) of the particles of the boron-containing compound containing lithium, boron, and oxygen in the second paste to 11 times that in Example 1.

### "Example 15"

A second paste was manufactured in the same method as in Example 1 except that particles of Li₃BO₃ (lithium triborate) having an average particle size of 0.05 µm were used as the particles of the boron-containing compound containing lithium, boron, and oxygen.

Subsequently, in manufacturing the solid electrolyte layer unit, the first paste was applied in a thickness of 10 µm to a substrate formed of a polyethylene terephthalate (PET) film through screen printing and was dried for 10 minutes at 80°C. The second paste was applied in a thickness of 1 µm to the dried first paste through screen printing and dried for 5 minutes at 80°C. Then the resultant layers were separated from the substrate; and thereby, the first solid electrolyte layer unit was manufactured.

Subsequently, the first paste was applied in a thickness of 10 µm and was dried for 10 minutes at 80°C. The second paste was applied in a thickness of 1.25 µm to the dried first paste through screen printing and dried for 5 minutes at 80°C. Then, the resultant layers were separated from the substrate; and thereby, the second solid electrolyte layer unit was manufactured.

The first solid electrolyte layer unit and the second solid electrolyte layer unit were bonded such that the solid electrolyte layers thereof faced each other; and thereby, a third solid electrolyte layer unit in which the sheet formed using the second paste with a thickness of 1 µm, the sheet formed using the first paste with a thickness of 20 µm, and the sheet formed using the second paste with a thickness of 1.25 µm were stacked in this order was obtained.

An all-solid-state secondary battery 10 according to Example 15 was obtained in the same method as in Example 1 except that the third solid electrolyte layer unit was disposed such that the first solid electrolyte layer unit faced the green sheet to be the negative electrode layer and the second solid electrolyte layer unit faced the green sheet to be the positive electrode layer.

### "Example 16"

An all-solid-state secondary battery 10 according to Example 16 was obtained in the same method as in Example 15 except that the thickness of the second paste in the second solid electrolyte layer unit was 1 µm.

### "Example 17"

An all-solid-state secondary battery 10 according to Example 17 was obtained in the same method as in Example 15 except that the thickness of the second paste in the second solid electrolyte layer unit was 0.8 µm.

### "Example 18"

An all-solid-state secondary battery 10 according to Example 18 was obtained in the same method as in Example 15 except that the thickness of the second paste in the second solid electrolyte layer unit was 0.7 µm.

### "Comparative Example 1"

An all-solid-state secondary battery 10 according to Comparative Example 1 was obtained in the same method as in Example 1 except that a laminated sheet to be the solid electrolyte layer manufactured using the following method was used instead of the solid electrolyte layer unit.

The first paste according to Example 1 was applied in a thickness of 20 µm to a substrate formed of a polyethylene terephthalate (PET) film through screen printing and then was dried for 10 minutes at 80°C. Next, the layer was separated from the substrate. Accordingly, a laminated sheet to be the solid electrolyte layer was obtained.

### "Comparative Example 2"

An all-solid-state secondary battery 10 according to Comparative Example 2 was obtained in the same method as in Example 1 except that a green sheet to be the solid electrolyte layer manufactured using the following method was used instead of the solid electrolyte layer unit.

The first paste and the second paste according to Example 1 were mixed such that the volume ratio of particles of Li₃₊ₓSiₓP₁₋ₓO₄ (where x in Expression (1) was 0.5) and particles of the boron-containing compound containing lithium, boron, and oxygen was 100:1; and thereby, a paste for the solid electrolyte layer according to Comparative Example 2 was manufactured.

Subsequently, the paste for the solid electrolyte layer was applied in a thickness of 20 µm to a substrate formed of a polyethylene terephthalate (PET) film through screen printing and then was dried for 10 minutes at 80°C. Next the layer was separated from the substrate. Accordingly, a green sheet to be the solid electrolyte layer according to Comparative Example 2 was obtained.

### "Comparative Example 3"

An all-solid-state secondary battery 10 according to Comparative Example 3 was obtained in the same method as in Example 1 except that Li_{1.3}Al_{0.3}Ti_{1.7}(PO₄)₃ was used as the solid electrolyte.

The constituents of the negative electrode layers in the all-solid-state secondary batteries 10 according to Examples 1 to 18 and Comparative Examples 1 to 3 obtained in these methods are shown in Tables 1 to 3.

**[Table 1]**

| | Configuration of negative electrode layer | Primary phase | Position of secondary phase | Volume proportion of secondary phase in solid electrolyte layer (vol%) | Particle size of secondary phase (µm) | Sum of primary phase and secondary phase in solid electrolyte (%) | Initial capacity (µA) |
|---|---|---|---|---|---|---|---|
| Ex. 4 | AgPd | Li_{3.5}Si_{0.5}P_{0.5}O₄ | In contact with a part of interface between solid electrolyte layer and negative electrode layer | 0.5 | 0.5 | 100 | 4 |
| Ex. 1 | AgPd | Li_{3.5}Si_{0.3}P_{0.5}O₄ | In contact with a part of interface between solid electrolyte layer and negative electrode layer | 1 | 0.5 | 100 | 6 |
| Ex. 2 | AgPd | Li_{3.5}Si_{0.5}P_{0.5}O₄ | In contact with a part of interface between solid electrolyte layer and negative electrode layer | 3 | 0.5 | 100 | 8 |
| Ex. 13 | AgPd | Li_{3.5} Si_{0.5}P_{0.5}O₄ | In contact with a part of interface between solid electrolyte layer and negative electrode layer | 10 | 0.5 | 100 | 7 |
| Ex. 14 | AgPd | Li_{3.5}Si_{0.5}P_{0.5}O₄ | In contact with a part of interface between solid electrolyte layer and negative electrode layer | 11 | 0.5 | 100 | 6 |
| Ex. 3 | AgPd | Li_{3.5}Si_{0.5}P_{0.5}O₄ | In contact with a part of interface between solid electrolyte layer and negative electrode layer | 15 | 0.5 | 100 | 4 |
| Com. Ex. 1 | AgPd | Li_{3.5}Si_{0.5}P_{0.5}O₄ | Secondary phase was not present | - | - | 100 | 2 |
| Com. Ex. 2 | AgPd | Li_{3.5}Si_{0.5}P_{0.5}O₄ | Being substantially regularly present in whole solid electrolyte layer | 1 | 0.5 | 100 | 2 |
| Com. Ex. 3 | AgPd | Li_{1.3}Al_{0.3}Ti_{1.7}(PO₄)₃ | In contact with a part of interface between solid electrolyte layer and negative electrode layer | 1 | 0.5 | 100 | 5 |

**[Table 2]**

| | Configuration of negative electrode layer | Primary phase | Position of secondary phase | Volume proportion of secondary phase in solid electrolyte layer (vol%) | Particle size of secondary phase (µm) | Sum of primary phase and secondary phase in solid electrolyte (%) | Initial capacity (µA) |
|---|---|---|---|---|---|---|---|
| Ex. 7 | AgPd | Li_{3.5}Si_{0.5}P_{0.5}O₄ | In contact with a part of interface between solid electrolyte layer and negative electrode layer | 1 | 0.05 | 100 | 4 |
| Ex. 5 | AgPd | Li_{3.5}Si_{0.5}P_{0.5}O₄ | In contact with a part of interface between solid electrolyte layer and negative electrode layer | 1 | 0.2 | 100 | 5 |
| Ex. 10 | AgPd | Li_{3.5}Si_{0.5}P_{0.5}O₄ | In contact with a part of interface between solid electrolyte layer and negative electrode layer | 1 | 1 | 100 | 5 |
| Ex. 11 | AgPd | Li_{3.5}Si_{0.5}P_{0.5}O₄ | In contact with a part of interface between solid electrolyte layer and negative electrode layer | 1 | 3 | 100 | 4.5 |
| Ex. 12 | AgPd | Li_{3.5}Si_{0.5}P_{0.5}O₄ | In contact with a part of interface between solid electrolyte layer and negative electrode layer | 1 | 3.2 | 100 | 4.2 |
| Ex. 6 | AgPd | Li_{3.5}Si_{0.5}P_{0.5}O₄ | In contact with a part of interface between solid electrolyte layer and negative electrode layer | 1 | 5 | 100 | 4 |
| Ex. 8 | LTO/Cu | Li_{3.5}Si_{0.5}P_{0.5}O₄ | In contact with a part of interface between solid electrolyte layer and negative electrode layer | 1 | 0.5 | 100 | 4 |
| Ex. 9 | AgPd | Li_{3.5}Si_{0.5}P_{0.5}O₄ | In contact with a part of interface between solid electrolyte layer and negative electrode layer and being substantially regularly present in whole solid electrolyte layer | 2 | 0.5 | 100 | 3 |
| Com. Ex. 1 | AgPd | Li_{3.5}Si_{0.5}P_{0.5}O₄ | Secondary phase was not present | - | - | 100 | 2 |
| Com. Ex. 2 | AgPd | Li_{3.5}Si_{0.5}P_{0.5}O₄ | Being substantially regularly present in whole solid electrolyte layer | 1 | 0.5 | 100 | 2 |
| Com. Ex. 3 | AgPd | Li_{1.3}Al_{0.3}Ti_{1.7}(PO₄)3 | In contact with a part of interface between solid electrolyte layer and negative electrode layer | 1 | 0.5 | 100 | 5 |

**[Table 3]**

| | Configuration of negative electrode layer | Primary phase | Position of secondary phase | Volume proportion of secondary phase in solid electrolyte layer (vol%) | Proportion of secondary phase negative electrode layer interface/positive electrode layer interface | Particle size of secondary phase (µm) | Sum of primary phase and secondary phase in solid electrolyte (%) | Initial capacity (µA) |
|---|---|---|---|---|---|---|---|---|
| Ex. 7 | AgPd | Li_{3.5}Si_{0.5}P_{0.5}O₄ | In contact with a part of interface between solid electrolyte layer and negative electrode layer | 1 | 0.05 | - | 100 | 4 |
| Ex. 15 | AgPd | Li_{3.5}Si_{0.5}P_{0.5}O₄ | In contact with a part of interface between solid electrolyte layer and negative electrode layer | 2.25 | 0.8 | 0.05 | 100 | 3 |
| Ex. 16 | AgPd | Li_{3.5}Si_{0.5}P_{0.5}O₄ | In contact with a part of interface between solid electrolyte layer and negative electrode layer | 2 | 1 | 0.05 | 100 | 3.5 |
| Ex. 17 | AgPd | Li_{3.5}Si_{0.5}P_{0.5}O₄ | In contact with a part of interface between solid electrolyte layer and negative electrode layer | 1.8 | 1.2 | 0.05 | 100 | 3.7 |
| Ex. 18 | AgPd | Li_{3.5}Si_{0.5}P_{0.5}O₄ | In contact with a part of interface between solid electrolyte layer and negative electrode layer | 1.7 | 1.5 | 0.05 | 100 | 3.8 |

In the all-solid-state secondary batteries 10 according to Examples 1 to 18 and Comparative Examples 1 to 3, locations of the secondary phase, the volume proportion (vol%) of the secondary phase in the solid electrolyte layer, and the particle size (µm) of the secondary phase were measured using the following methods. The results thereof are shown in Tables 1 to 3.

Each all-solid-state secondary battery 10 was cut to expose a cross-section thereof, and a polished sectional surface was obtained by a cross-section polisher (CP). The all-solid-state secondary battery 10 was cut to be divided at the substantially central part between the first external terminal and the second external terminal when the laminate was seen from the stacking surface. The obtained sectional surface was observed at a 5000 times magnification using a scanning electron microscope (SEM), and backscattered electron images of 10 fields of view were obtained.

The positive electrode layer, the negative electrode layer, and the primary phase and the secondary phase in the positive electrode layer were discriminated on the basis of the contrast of the obtained backscattered electron images of 10 fields of view.

Then, it was ascertained whether the secondary phase was present in the solid electrolyte layer or not. When a secondary phase was present in the solid electrolyte layer, it was checked whether the location thereof was in contact with the interface between the solid electrolyte layer and the negative electrode layer or not.

In the all-solid-state secondary battery 10 in which a secondary phase was present in the solid electrolyte layer, the backscattered electron images were converted to monochromic images and binarized. The number of pixels in a part corresponding to the secondary phase in each field of view was measured, and the resultant values were added together. Then, the volume proportion of the secondary phase was calculated for each field of view using the following expression, and an average value of 10 fields of view was set as the volume proportion (vol%) of the secondary phase. Volume proportion (vol%) of secondary phase = (number of pixels in field of view/total number of pixels in field of view)×100

In the all-solid-state secondary battery 10 in which a secondary phase was present in the solid electrolyte layer, a secondary phase discriminated on the basis of the contrast was extracted for each of the backscattered electron images of 10 fields of view, and an average value of the particle sizes thereof was calculated and set as the particle size (µm) of the secondary phase. In a case where a sectional shape of the secondary phase was not circular (undefined in a sectional view), a diameter of a major-axis direction of the secondary phase was used as the particle size.

In the all-solid-state secondary batteries 10 according to Examples 1 to 18 and Comparative Examples 1 to 3, an initial capacity (µA) was calculated using the following method. The results thereof are shown in Tables 1 to 3.

### (Measurement of initial capacity (µA))

The capacity was a discharge capacity, a procedure of performing constant-current charge (CC charging) until a battery voltage became 3.9 V at a constant current of 10 µA in an environment of 60°C and then performing discharge (CC discharging) until the battery voltage became 0 V at the constant current of 10 µA was defined as one cycle, and the discharge capacity (µAh) at the tenth cycle was measured after 10 cycles was repeated.

As shown in Tables 1 to 3, it was ascertained in the all-solid-state secondary batteries 10 according to Examples 1 to 18 that the secondary phase was included in the solid electrolyte layer and the secondary phase was present in contact with a part of an interface between the negative electrode layer and the solid electrolyte layer.

The all-solid-state secondary batteries 10 according to Examples 1 to 18 had a larger initial capacity than those of the all-solid-state secondary battery according to Comparative Example 1 in which no secondary phase was present in the solid electrolyte layer and the all-solid-state secondary battery according to Comparative Example 2 in which the secondary phases (the areas of the secondary phase) were substantially regularly present in the whole solid electrolyte layer. This is estimated because the secondary phase serving as a starting point of a reaction in releasing and receiving lithium ions was present in the interface between the solid electrolyte layer and the negative electrode layer in the all-solid-state secondary batteries 10 according to Examples 1 to 18.

Particularly, Example 1 in which the volume proportion of the secondary phase in the solid electrolyte layer was 1 vol% and Example 2 in which the volume proportion of the secondary phase was 3 vol% had a larger initial capacity than those of Example 4 in which the volume proportion of the secondary phases was 0.5 vol% and Example 3 in which the volume proportion of the secondary phases was 15 vol%.

In Example 1 in which the particle size of the secondary phases in the solid electrolyte layer was 0.5 µm had a larger initial capacity than those of Example 5 in which the particle size of the secondary phase was 0.2 µm and Example 7 in which the particle size of the secondary phase was 0.05 µm.

Example 1 in which the particle size of the secondary phase in the solid electrolyte layer was 0.5 µm had a larger initial capacity than those of Example 6 in which the particle size of the secondary phase was 5 µm and Example 10 in which the particle size of the secondary phase was 1 µm.

### Industrial Applicability

It is possible to provide an all-solid-state battery having higher safety and a larger capacity in comparison with the related art.

### Reference Signs List

1 Positive electrode layer
1A Positive-electrode current collector
1B Positive-electrode active material layer
2, 21 Negative electrode layer
2A Negative-electrode current collector
2B Negative-electrode active material layer
3 Solid electrolyte layer
4 Laminate
5 First external terminal
6 Second external terminal
10, 20 All-solid-state secondary battery
31 Primary phase
32 Secondary phase

## Claims

1. An all-solid-state secondary battery comprising a sintered body including a positive electrode layer, a negative electrode layer, and a solid electrolyte layer interposed between the positive electrode layer and the negative electrode layer,
wherein the solid electrolyte layer includes a primary phase including an electrolyte represented by Expression (1) and a secondary phase including a boron-containing compound containing lithium, boron, and oxygen, and at least a part of the secondary phase is in contact with a part of an interface between the negative electrode layer and the solid electrolyte layer:
Li₃₊ₓSiₓP₁₋ₓO₄ (1)
(where 0<x<1 is satisfied in Expression (1)).

2. The all-solid-state secondary battery according to claim 1, wherein a volume proportion of the secondary phase in the solid electrolyte layer is equal to or greater than 1 vol% and equal to or less than 10 vol%.

3. The all-solid-state secondary battery according to claim 1 or 2, wherein the secondary phase is formed of particles having a particle size of 0.1 µm to 3 µm.

4. The all-solid-state secondary battery according to claim 1, wherein a proportion of the secondary phase present in contact with a part of the interface between the negative electrode layer and the solid electrolyte layer is larger than a proportion of the secondary phase present in contact with a part of an interface between the positive electrode layer and the solid electrolyte layer.

5. The all-solid-state secondary battery according to claim 1, wherein a sum of a volume of the primary phase and a volume of the secondary phase in the solid electrolyte layer is equal to or greater than 90 vol%.

6. The all-solid-state secondary battery according to any one of claims 1 to 3, wherein the negative electrode layer contains any one metal selected from a group consisting of Ag, Pd, Au, and Pt.
